# EUROPÄISCHE PATENTSCHRIFT

(11) **EP 0 972 211 B1**
(45) Veröffentlichungstag und Bekanntmachung des Hinweises auf die Patenterteilung: **17.10.2001**
(21) Anmeldenummer: 98912259.3
(22) Anmeldetag: 18.02.1998
(51) Int. Cl.: G01S 7/03, G01S 13/93, H01Q 1/32, H01Q 19/06

(54) **RADARSYSTEM, INSBESONDERE FÜR KRAFTFAHRZEUGANWENDUNGEN**
RADAR SYSTEM, INCLUDING FOR USE IN A VEHICLE
SYSTEME DE RADAR, NOTAMMENT POUR APPLICATIONS EN VEHICULE

(30) Priorität: 09.04.1997 DE 19714578
(43) Veröffentlichungstag der Anmeldung: 19.01.2000
(73) Patentinhaber: ROBERT BOSCH GMBH, 70442 Stuttgart (DE)
(72) Erfinder: HAUK, Joachim, D-71665 Vaihingen (DE)
(86) Internationale Anmeldenummer: DE9800469
(87) Internationale Veröffentlichungsnummer: WO9845725

(56) Entgegenhaltungen:
- EP-A- 0 310 414
- EP-A- 0 690 315
- WO-A-97/02496
- DE-A- 2 733 015
- DE-A- 4 412 770

## Beschreibung

### Stand der Technik

Die vorliegende Erfindung betrifft ein Radarsystem, insbesondere für Kraftfahrzeuganwendungen, welches eine Antennenanordnung bestehend aus mindestens einem Antennenfeed und mindestens einem fokussierenden Mittel aufweist. Ein solches Radarsystem ist beispielsweise aus der WO 97/02496 bekannt. Dort wird ein monostatischer FMCW-Radarsensor für ein Fahrzeug zur Detektion von Objekten beschrieben, bei dem wenigstens ein Antennenfeed in Verbindung mit einer dielektrischen Linse sowohl zum Senden als auch zum Empfangen eines entsprechenden Echosignals ausgebildet ist. In einem Ausführungsbeispiel wird ein Radarsystem beschrieben, das drei Antennenfeeds zum Senden und Empfangen aufweist. Mit einer solchen Anordnung ist es möglich, eine Winkellage detektierter Radarziele zu bestimmen. Schwierigkeiten ergeben sich dabei jedoch, wenn die Antennendiagramme, die an den einzelnen Antennenfeeds gemessen werden können, zu große Nebenkeulen aufweisen. Dies gilt insbesondere, wenn die Winkellage eines detektierten Radarziels anhand eines Amplitudenvergleichs der Empfangssignale aus den einzelnen Antennenfeeds bestimmt werden soll.

Aus der DE 44 12 770 A1 ist ein gattungsgemäßes Radarsystem bekannt, bei dem die seitlich von einer Antennenlinse vorhandenen Gehäusewände zur Vermeidung von Wandreflexionen mit einer mikrowellendämpfenden Schicht überzogen sind. Dies verhindert störende Reflexionen innerhalb des Gehäuses, hat jedoch nur einen geringen Einfluß auf die Ausbildung oder Unterdrückung von Nebenkeulen.

Die EP 0 310 414 A2 offenbart eine Antenne, bei der zwischen der Antenne und einer dielektrischen Linse eine Zwischenschicht angeordnet ist, wodurch das Antennendiagramm modifiziert wird. Die genannte Zwischenschicht ist hierbei als eine Viertelwellen-Impedanzanpassungsschicht ausgeführt. Um den Elevationswinkel zu erhöhen, das heißt, die Überdeckung in Elevationsrichtung zu vergrößern, wird in der EP 0 310 414 A2 der Querschnitt der dielektrischen Linse entsprechend gestaltet. Um die Elevations-Seitenstrahlungskeulen zu optimieren, wird in der EP 0 310 414 A2 die dielektrische Linse so gedreht, daß das eine Ende der Oberfläche der Linse näher an einem sektorartigen Hornstrahler liegt, als das andere Ende der Oberfläche der Linse. Um unerwünschte Nullstellen im Antennendiagramm und die Abstrahlung von den Enden der dielektrischen Linse zu verhindern, werden Absorber an dem Außenrand der dielektrischen Linse und der anliegenden Flächen befestigt.

### Aufgabe, Lösung und Vorteile der Erfindung

Ziel der vorliegenden Erfindung ist es dementsprechend, ein Radarsystem der eingangs genannten Art anzugeben, bei dem Nebenkeulen im Antennendiagramm auf einfache und kostengünstige Weise vermindert sind.

Erfindungsgemäß wird diese Aufgabe dadurch gelöst, daß die Antennenanordnung des Radarsystems mindestens ein mikrowellendämpfendes Mittel aufweist, welches so ausgeformt und/oder angeordnet ist, daß es zumindest teilweise in den Strahlengang der abgestrahlten oder empfangenen Radarwellen hineinragt, daß das mikrowellendämpfende Mittel zum Randbereich des fokussierenden Mittels hin zunehmend dicker ist und daß das mikrowellendämpfende Mittel auf der Seite des fokussierenden Mittels angeordnet ist, die dem mindestens einen Antennenfeed zugewendet ist. Dabei wird unter dem Begriff mikrowellendämpfendes Mittel im folgenden jedes Objekt oder jede Anordnung verstanden, dessen oder deren vorrangige oder zumindest wesentliche Eigenschaft in einer Dämpfung oder Absorption auftreffender Mikrowellen liegt. Als Materialien eignen sich hier insbesondere Kunst-oder Schaumstoffe, die mit Kohlenstoff- oder Metallpartikel versehen sind.

Das mikrowellendämpfende Mittel kann dabei so angeordnet sein, daß es nur in den Randbereich des Strahlengangs der abgestrahlten oder empfangenen Radarwellen hineinragt. Besonders vorteilhaft ist es, wenn das mikrowellendämpfende Mittel auf- oder in das fokussierende Mittel selbst eingebracht ist. Alternativ kann es jedoch auch in dem Bereich zwischen dem mindestens einen Antennenfeed und dem fokussierenden Mittel angebracht sein. Gemäß einer besonders bevorzugten Ausgestaltung der Erfindung ist das mikrowellendämpfende Mittel ringförmig auf der Seite des fokussierenden Mittels aufgebracht, die dem mindestens einen Antennenfeed zugewendet ist.

Grundgedanke der Erfindung ist, mit Hilfe des mikrowellendämpfenden Mittels die Energiedichteverteilung, die sich auf dem fokussierenden Mittel beim Senden und/oder Empfangen von Radarwellen einstellt, so zu beeinflussen, daß das Antennendiagramm des mindestens einen Antennenfeeds möglichst geringe Nebenkeulen aufweist. Dazu muß die Energiedichte zum Randbereich des fokussierenden Mittels hin geringer sein als in der Mitte. Dabei kann das mikrowellendämpfende Mittel so ausgebildet sein, daß sich auf dem fokussierenden Mittel beim Senden und beim Empfangen von Radarwellen eine Energiedichteverteilung gemäß einer Funktion ergibt, die den aus der digitalen Signalverarbeitung bekannten Fensterfunktionen entspricht. Beispielhaft seien hier die Hanning-, die Hamming-, die Cosinus-, die Blackman- und die Kaiser-Fensterfunktion genannt. Diese Funktionen sind zumindest im Bereich der digitalen Signalverarbeitung, insbesondere bei der Anwendung der Fast Fourier Transformation, allgemein bekannt und definiert. Eine Beschreibung findet sich beispielsweise in "Entwurf und Realisierung digitaler Filter" von S. A. Azizi, erschienen im Oldenbourg Verlag 1988, auf den Seiten 241 bis 256. Gemeinsam ist all diesen Funktionen, daß sie einen Verlauf aufweisen, der beginnend bei einem Minimum symmetrisch bis auf einen Maximalwert ansteigt und danach wiederum auf den Anfangswert abfällt. Die Steilheit des Anstiegs und des Abfalls der jeweiligen Funktion bestimmt entsprechend den bekannten Gesetzen der Fouriertransformation die Stärke und Ausbildung von Nebenkeulen im Antennendiagramm. Neben den bereits genannten Funktionen sind für eine Dimensionierung des mikrowellendämpfenden Mittels auch sämtliche weiteren Funktionen geeignet, wie beispielsweise eine Gaußfunktion, die diesen beschriebenen Verlauf aufweisen.

Um diesen beschriebenen Verlauf der Energiedichteverteilung auf dem fokussierenden Mittel zu erreichen, muß das mikrowellendämpfende Mittel zum Randbereich des fokussierenden Mittels hin beziehungsweise zum Randbereich des Strahlengangs der Radarwellen hin zunehmend mehr Energie der Radarwellen absorbieren. Dementsprechend ist das mikrowellendämpfende Mittel zum Randbereich des fokussierenden Mittels oder zum Randbereich des Strahlengangs hin zunehmend dicker. Gleichzeitig soll das mikrowellendämpfende Mittel den gesendeten oder empfangenen Radarwellen jedoch so wenig Energie wie möglich entziehen und dementsprechend insgesamt so dünn wie möglich sein. Es sei hier dem Fachmann für seinen jeweiligen konkreten Anwendungsfall überlassen, einen optimalen Kompromiß hinsichtlich der Dimensionierung und Ausformung des mikrowellendämpfenden Mittels zu finden. In vielen Fällen wird bereits eine Reduzierung von vorhandenen Nebenkeulen, die nicht zu einem vollständigen Auslöschen führt, ausreichen.

Vorteil des erfindungsgemäßen Radarsystems ist, daß die Nebenkeulen im Antennendiagramm, insbesondere der einzelnen Antennenfeeds, einstellbar stark gedämpft sind. Dabei ist dies sehr preisgünstig und verfahrenstechnisch sehr einfach zu realisieren. Besonders vorteilhaft zur Unterdrückung von Nebenkeulen ist es, die erfindungsgemäße Verwendung eines mikrowellendämpfenden Mittels mit einer Optimierung der geometrischen Abmessungen des fokussierenden Mittels und der Antennenfeeds zu kombinieren. Somit bietet die Erfindung einen zusätzlichen Freiheitsgrad bei der Dimensionierung einer Antennenanordnung eines Radarsystems.

Als fokussierendes Mittel wird für die eingangs genannte Anwendung bevorzugt eine dielektrische Antennenlinse verwendet. Die Antennenfeeds sind dabei vorrangig als Patchantennen ausgeführt. Alternativ kann ein erfindungsgemäßes Radarsystem jedoch auch einen Antennenreflektor und/oder Antennenfeeds in Hohlleiterausführung besitzen.

### Beschreibung eines Ausführungsbeispiels

Nachfolgend wird ein Ausführungsbeispiel der Erfindung anhand einer Zeichnung erläutert. Es zeigen
Figur 1 ein erfindungsgemäßes Radarsystem im Querschnitt,
Figur 2 ein Antennendiagramm eines gattungsgemäßen Radarsystems ohne mikrowellendämpfendes Mittel und
Figur 3 ein Antennendiagram eines erfindungsgemäßen Radarsystems mit einem mikrowellendämpfenden Mittel.

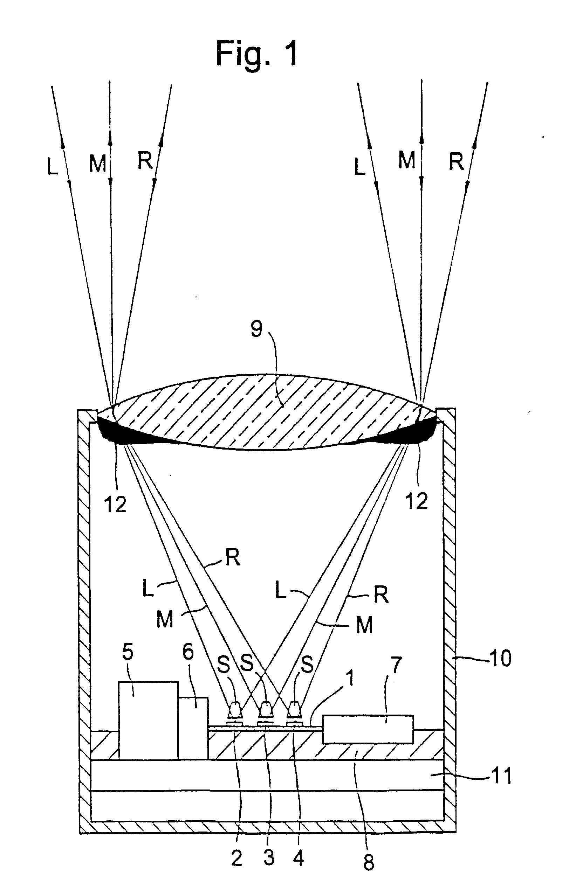

Figur 1 zeigt ein erfindungsgemäßes Radarsystem, dessen Schaltungsbestandteile auf einer Basisplatte 8 innerhalb eines Gehäuses 10 untergebracht sind. In Strahlrichtung nach vorne ist das Gehäuse 10 durch eine dielektrische Linse 9 abgeschlossen. Sie dient gleichzeitig als fokussierendes Mittel und ist vorzugsweise aus Kunstoff oder Keramik gefertigt. Auf der Basisplatte 8 befindet sich eine Mikrostreifenleiteranordnung 1, die unter anderem Antennenfeeds 2, 3, 4 beinhaltet. Oberhalb jedes der drei Antennenfeeds 2, 3, 4 ist jeweils ein dielektrischer Stielstrahler S angeordnet. Mit 5 ist ein Oszillator, vorzugsweise ein Gunnoszillator in einer Hohlleiteranordnung bezeichnet, dessen Energie über einen bekannten Stufentransformator 6 auf die Mikrostreifenleiteranordnung 1 übergekoppelt wird. Mit 7 ist ein Stabilisierungsnetzwerk bezeichnet, welches die Frequenz des Oszillators 5 gemäß einer gewünschten Modulation steuert und stabilisiert. Drei V-förmig verlaufende Linien L, M, R kennzeichnen ausgehend von jeden der drei Antennenfeeds 2, 3, 4 die Randbereiche der Strahlengänge der Radarwellen. Mit 11 ist ein Raum unterhalb der Basisplatte 8 bezeichnet, in dem weitere Schaltungsbestandteile untergebracht sein können. Auf der gehäuseinneren Seite der Antennenlinse 9 ist in deren Randbereich ein erfindungsgemäßes mikrowellendämpfendes Mittel 12 aufgebracht. Konkret handelt es sich hierbei um einen Ring aus einem graphithaltigen Flachabsorber, dessen Außendurchmesser dem Außendurchmesser der Antennenlinse 9 entspricht. Wie man sieht, besitzt das mikrowellendämpfende Mittel 12 zum Randbereich der Antennenlinse 9 hin einen zunehmend größeren Querschnitt, das heißt es ist zum Randbereich der Antennenlinse 9 hin zunehmend dicker.

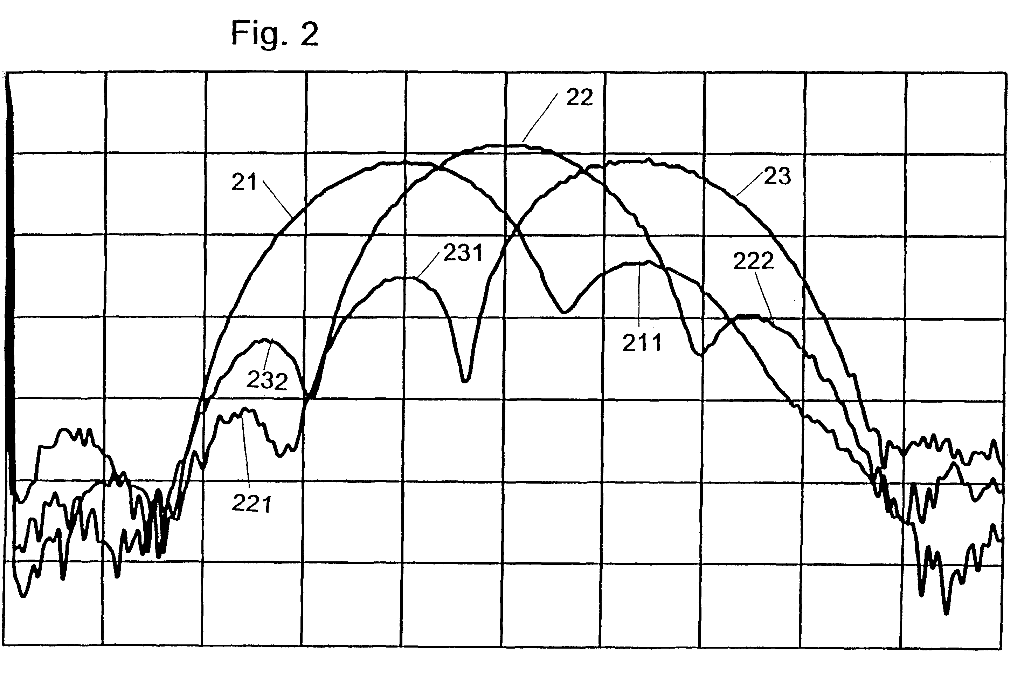

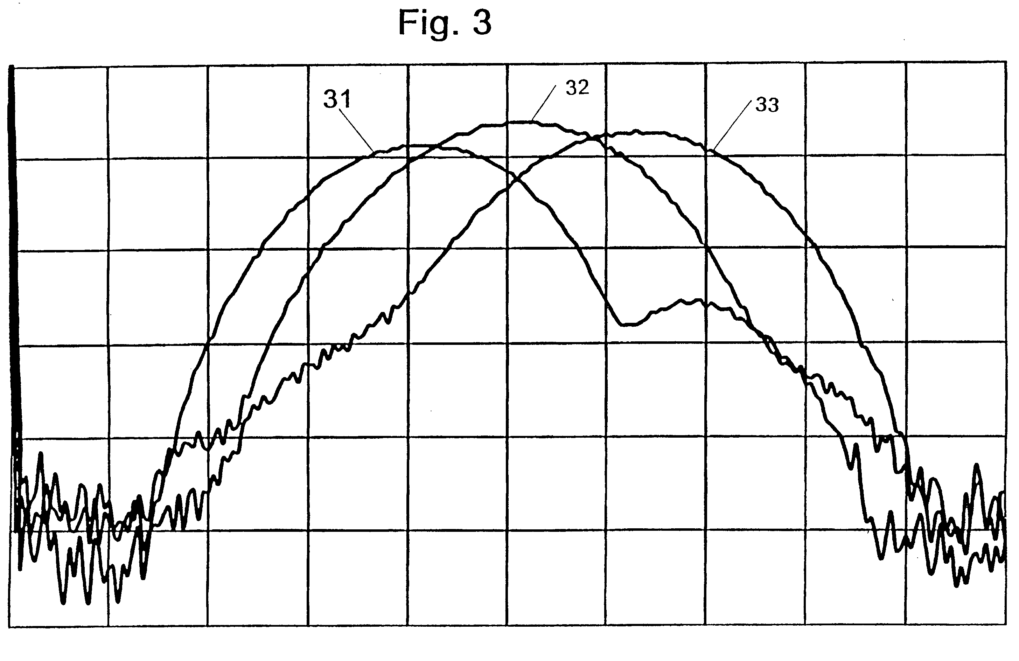

Figur 2 zeigt ein Antennendiagramm eines gattungsgemäßen Radarsystems, das nicht mit einem erfindungsgemäßen mikrowellendämpfenden Mittel 12 versehen ist. Eine Kurve 21 zeigt das Antennendiagramm des linken Antennenfeeds 2, eine Kurve 22 das Antennendiagramm des mittleren Antennenfeeds 3 und eine Kurve 23 das Antennendiagramm des rechten Antennenfeeds 4. Deutlich ist zu sehen, daß jeder der drei Diagrammverläufe Nebenkeulen 211, 221, 222, 231 und 232 aufweist. Demgegenüber zeigt Figur 3 den Verlauf des Antennendiagramms eines vergleichbaren Radarsystems, dessen Antennenlinse nun gemäß Figur 1 mit einem mikrowellendämpfenden Mittel versehen ist. Wiederum geben die Verläufe 31, 32 und 33 die Antennendiagramme der drei Antennenfeeds 2, 3 und 4 an. Im Vergleich mit den Antennendiagrammen gemäß Figur 2 sind die Nebenkeulen deutlich verringert.

## Patentansprüche

1. Radarsystem, insbesondere für Kraftfahrzeuganwendungen, mit einer Antennenanordnung bestehend aus
- mindestens einem Antennenfeed (2, 3, 4) und
- mindestens einem fokussierenden Mittel (9),
- wobei die Antennenanordnung mindestens ein mikrowellendämpfendes Mittel (12) aufweist, welches so ausgeformt und/oder angeordnet ist, daß es zumindest teilweise in den Strahlengang (L, M, R) der abgestrahlten oder empfangenen Radarwellen hineinragt,
**dadurch gekennzeichnet,**
- **daß** das mikrowellendämpfende Mittel zum Randbereich des fokussierenden Mittels hin zunehmend dicker ist und
- **daß** das mikrowellendämpfende Mittel auf der Seite des fokussierenden Mittels angeordnet ist, die dem mindestens einen Antennenfeed zugewendet ist.

2. Radarsystem nach Anspruch 1,
**dadurch gekennzeichnet,**
**daß** das mikrowellendämpfende Mittel auf das fokussierende Mittel auf- oder in das fokussierende Mittel eingebracht ist.

3. Radarsystem nach Anspruch 1 oder 2,
**dadurch gekennzeichnet,**
**daß** das mikrowellendämpfende Mittel ringförmig auf einer Seite des fokussierenden Mittels aufgebracht ist.

4. Radarsystem nach einem der vorhergehenden Ansprüche,
**dadurch gekennzeichnet,**
**daß** das mikrowellendämpfende Mittel ein kohlenstoffoder metallhaltiger Schaum- oder Kunststoff ist.

5. Radarsystem nach einem der vorhergehenden Ansprüche,
**dadurch gekennzeichnet,**
**daß** das Radarsystem ein mehrstrahliges Radarsystem mit mehreren Speiseelementen und einem gemeinsamen fokussierenden Mittel ist.

6. Radarsystem nach einem der vorhergehenden Ansprüche,
**dadurch gekennzeichnet,**
**daß** das mindestens eine Speiseelement als Patchantennenelement ausgeführt ist und **daß** das fokussierende Mittel eine dielektrische Linse ist.

## Claims

1. Radar system, particularly for motor vehicle applications, having an antenna arrangement comprising:
- at least one antenna feed (2, 3, 4) and
- at least one focussing means (9),
- the antenna arrangement having at least one microwave-attenuating means (12) which is shaped and/or arranged such that at least part of it projects into the beam path (L, M, R) of the radiated or received radar waves,
**characterized**
- **in that** the microwave-attenuating means increases in thickness toward the edge region of the focussing means, and
- **in that** the microwave-attenuating means is arranged on that side of the focussing means which faces the at least one antenna feed.

2. Radar system according to Claim 1,
**characterized**
**in that** the microwave-attenuating means is fitted onto the focussing means or is inserted into the focussing means.

3. Radar system according to Claim 1 or 2,
**characterized**
**in that** the microwave-attenuating means is fitted on one side of the focussing means in annular fashion.

4. Radar system according to one of the preceding claims,
**characterized**
**in that** the microwave-attenuating means is a foam or plastic containing carbon or metal.

5. Radar system according to one of the preceding claims,
**characterized**
**in that** the radar system is a multi-beam radar system having a plurality of supply elements and a common focussing means.

6. Radar system according to one of the preceding claims,
**characterized**
**in that** the at least one supply element is in the form of a patch antenna element and in that the focussing means is a dielectric lens.

## Revendications

1. Système de radar notamment pour des applications à un véhicule automobile, comportant un dispositif d'antennes avec :
- au moins une alimentation d'antennes (2, 3, 4), et
- au moins un moyen de focalisation (9),
- le dispositif d'antennes ayant au moins un moyen atténuant les micro-ondes (12) formé et/ou disposé pour pénétrer au moins partiellement dans le chemin des rayons L, M, R des ondes radar émises ou reçues,
**caractérisé en ce que**
- le moyen atténuant les micro-ondes augmente d'épaisseur vers le bord du moyen de focalisation, et
- le moyen atténuant les micro-ondes est prévu sur le côté du moyen de focalisation qui est tourné vers au moins une alimentation d'antennes.

2. Système de radar selon la revendication 1,
**caractérisé en ce que**
le moyen atténuant les micro-ondes est un moyen prévu sur ou dans le moyen de focalisation.

3. Système de radar selon la revendication 1 ou 2,
**caractérisé en ce que**
le moyen atténuant les micro-ondes a une forme annulaire et est prévu sur un côté du moyen de focalisation.

4. Système de radar selon l'une quelconque des revendications précédentes,
**caractérisé en ce que**
le moyen atténuant les micro-ondes est une mousse ou une matière synthétique contenant du carbone ou du métal.

5. Système de radar selon l'une quelconque des revendications précédentes,
**caractérisé en ce que**
le système de radar est un système à plusieurs faisceaux avec plusieurs éléments d'alimentation et un moyen de focalisation commun.

6. Système de radar selon l'une quelconque des revendications précédentes,
**caractérisé en ce qu'**
au moins un élément d'alimentation est réalisé sous la forme d'une antenne étiquette et le moyen de focalisation est une lentille diélectrique.
